# EUROPEAN PATENT SPECIFICATION

(11) **EP 3 663 485 B1**
(45) Date of publication and mention of the grant of the patent: **21.12.2022**
(21) Application number: 18840824.9
(22) Date of filing: 27.07.2018
(51) Int. Cl.: E04G 21/02, B63B 35/44, E04G 21/04, B66C 23/34, B66C 23/84, B66C 23/32, B66C 23/28, B33Y 80/00, B33Y 10/00, B33Y 30/00

(54) **CONSTRUCTION DEVICE AND HOUSE**
BAUVORRICHTUNG UND HAUS
DISPOSITIF DE CONSTRUCTION ET MAISON

(30) Priority: 04.08.2017 CN 201710660901
(43) Date of publication of application: 10.06.2020
(73) Proprietor: Beijing Huashang Luhai Technology Co., Ltd., Beijing 101118 (CN)
(72) Inventor: WU, Jianping, Beijing 101118 (CN)
(74) Representative: Dr. Gassner & Partner mbB
(86) International application number: PCT/CN2018/097544
(87) International publication number: WO 2019/024807

(56) References cited:
- EP-A2- 1 842 822
- WO-A1-2016/166116
- WO-A1-2016/166116
- CN-A- 103 786 235
- CN-A- 103 786 235
- CN-A- 105 604 336
- CN-A- 105 604 336
- CN-A- 107 447 985
- CN-U- 204 507 204
- CN-U- 204 526 175
- CN-U- 204 526 175
- CN-U- 205 439 277
- CN-U- 205 439 277

## Description

### Field of the Invention

The present disclosure relates to the technical field of building manufacturing, and in particular, to a building device.

### Background of the Invention

Conventional building devices are disclosed in CN 205439277 U and CN 103786235 A.

With the development of society, the aging of social population is becoming more and more serious. Most of the young people are from single-child families, and there are fewer and fewer manual workers. This has in particular led to a serious shortage of labor force in the construction field, and has brought great resistance to the construction work required for production and living.

In the existing technologies, it is usually necessary to first build a frame of a building device in accordance with the expected house structure, and then to build the house within the frame of the building device. However, this requires that the frame of the building device is in the periphery of the expected house, and its volume, floor area, etc. need to be larger than or even much larger than the house expected to be built. This is very inconvenient and disadvantageous for building houses, especially large houses.

Therefore, there is a need for a building device that makes it easier to build a house.

### Summary of the Invention

In view of the above problems, the present invention provides a building device, by means of which a house can be built more conveniently.

According to a first aspect of the present invention, a building device with the features of claim 1 is provided. The building device, which is a 3D printing building device, comprises: a stand column extending in a longitudinal direction; a crossbeam extending in a transverse direction, the crossbeam being connected with the stand column and rotatable around a central axis of the stand column, the crossbeam including an upper crossbeam and a lower crossbeam; and a discharging mechanism being connected with the crossbeam and movable along the crossbeam, a discharging port of the discharging mechanism facing a building area. The discharging mechanism is constructed with at least two discharging ports spaced apart from each other and deviated from a central axis of the discharging mechanism. At least a feed hopper of the discharging mechanism is positioned between the upper crossbeam and the lower crossbeam. The discharging ports are rotatably connected and communicated with the feed hopper. The discharging ports are rotatable around the central axis of the discharging mechanism, and relative to the feed hopper. The discharging ports can be symmetrically arranged relative to a central line of a building wall to be built in a building area.

For the above building device, since the crossbeam can rotate around the central axis of the stand column and the discharging mechanism can move along the crossbeam, the discharging mechanism can release building materials to the building area within the range covered by the crossbeam, so as to build an expected house. The building device of this structure is very advantageous for the convenient building of the house, while occupying a relatively small area and space.

In one embodiment, the stand column includes a lower stand column unit and an upper stand column unit located above the lower stand column unit; the crossbeam is fixedly connected with the upper stand column unit; and the upper stand column unit can rotate around the central axis of the stand column relative to the lower stand column unit.

In one embodiment, the building device comprises a stand column rotating mechanism, which includes: an inner rotating ring sleeved outside the stand column, the inner rotating ring being fixed with the upper stand column unit in a circumferential direction; an outer rotating ring sleeved outside the inner rotating ring, the outer rotating ring being fixed with the lower stand column unit in a circumferential direction, the inner rotating ring being rotatable relative to the outer rotating ring, an outer surface of the outer rotating ring being constructed with teeth; and a rotating motor including a rotating motor body fixed with the inner rotating ring, and a rotating driving gear rotatably connected with the rotating motor body, the rotating driving gear meshing with the teeth on the outer surface of the outer rotating ring.

In one embodiment, the stand column includes a lower stand column unit and an upper stand column unit located above the lower stand column unit; the crossbeam is fixedly connected with the upper stand column unit. In this embodiment, the building device further comprises a lifting mechanism, which includes: a lifting lever fixed with the upper stand column unit in the longitudinal direction; and a guide fixed on the lower stand column unit and constructed with a guide hole extending along the longitudinal direction, wherein the lifting lever can move in the longitudinal direction relative to the guide hole to drive the upper stand column unit to move in the longitudinal direction relative to the lower stand column unit.

In one embodiment, external threads are constructed on an outer surface of the lifting lever; internal threads are constructed on an inner surface of the guide hole; the external threads mesh with the internal threads; the lifting mechanism further includes: a support frame sleeved outside the stand column and fixed with the upper stand column unit and the lifting lever in the longitudinal direction, and a lifting motor fixed to the support frame and constructed to drive the lifting lever to rotate relative to the guide hole.

In one embodiment, the stand column further includes a middle stand column unit, which is provided in a gap to support between the upper stand column unit and the lower stand column unit when the upper stand column unit moves away from the lower stand column unit in the longitudinal direction to form the gap between the upper stand column unit and the lower stand column unit, wherein after each layer of building body is constructed by using the building device, the upper stand column unit moves away from the lower stand column unit by a unit distance in the longitudinal direction, and after the upper stand column unit moves away from the lower stand column unit by a plurality of unit distances, the middle stand column unit is provided in the gap.

In one embodiment, the building device further comprises a vertical calibration mechanism, which includes: a measuring component for measuring whether the central axis of the stand column is accurately perpendicular to a base surface, and an adjusting component including: a fixed part fixed to the base surface and constructed with a receiving hole whose axis is parallel to the base surface, an inner wall of the receiving hole being constructed with internal threads; and a correction adjusting lever passing through the receiving hole, an outer surface of the correction adjusting lever being constructed with external threads matching the internal threads of the receiving hole, and one end of the correction adjusting lever being hinged with the stand column.

In one embodiment, the building device further comprises: a rack arranged along the crossbeam, and a transverse moving motor including a transverse moving motor body fixed to the discharging mechanism, and a transverse moving gear driven by the transverse moving motor body, the transverse moving gear meshing with the rack.

Compared with the existing technologies, the present invention has the following advantages. Since the crossbeam can rotate around the central axis of the stand column, and the discharging mechanism can move along the crossbeam, the discharging mechanism can release building materials to the building area within the range covered by the crossbeam, so as to build an expected house. The building device of this structure is very advantageous for the convenient building of the house, while occupying a relatively small area and space.

### Brief Description of the Drawings

The present invention will be described below in more detail with reference to the accompanying drawings, in which:
Fig. 1 is a structure diagram showing an embodiment of a building device according to the present invention;
Fig. 2 is a structure diagram showing an embodiment of a stand column rotating mechanism of the building device in Fig. 1;
Fig. 3 is a structure diagram showing an embodiment of a discharging mechanism of the building device in Fig. 1;
Fig. 4 is a structure diagram showing the discharging mechanism in Fig. 3 after being rotated by 90 degrees in a horizontal direction;
Figs. 5 to 7 are schematic diagrams showing a structure and working process of a lifting mechanism of the building device in Fig. 1; and
Fig. 8 is a top sectional view showing the lifting mechanism in Fig. 5.

In the accompanying drawings, same components are denoted by same reference signs, and the accompanying drawings are not drawn to actual scale.

### Detailed Description of the Embodiments

The present invention will be further explained below in conjunction with the accompanying drawings.

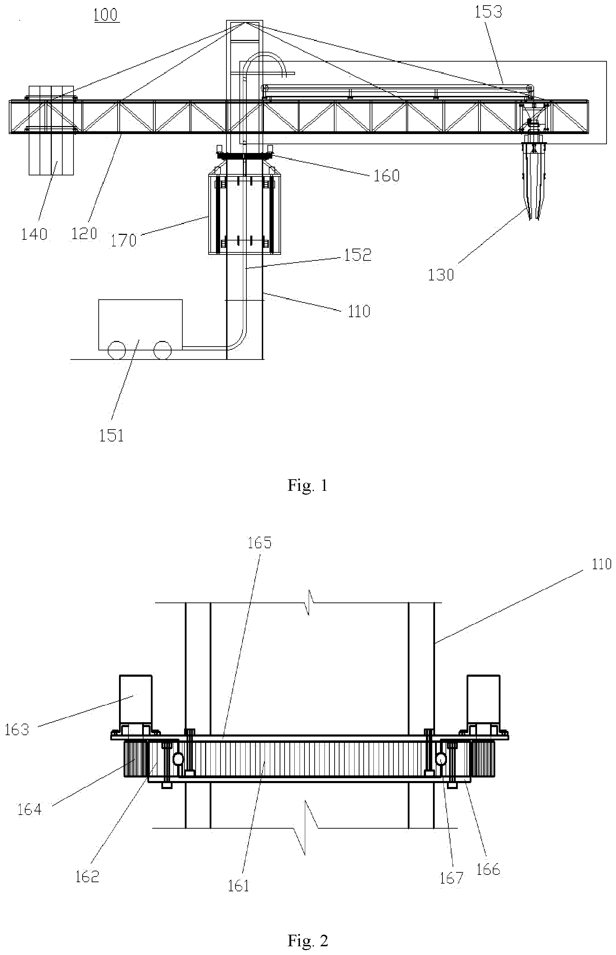

Fig. 1 schematically shows a structure of a building device 100 according to the present invention.

The building device 100 comprises a stand column 110 extending in a longitudinal direction and a crossbeam 120 extending in a transverse direction and rotatably connected with the stand column 110. The crossbeam 120 can rotate around a central axis of the stand column 110. The building device 100 further comprises a discharging mechanism 130 movably connected with the crossbeam 120. The discharging mechanism 130 can move along the crossbeam (i.e. in a transverse direction). Thus, the discharging mechanism 130 can reach an entire circular range covered by the rotation of the crossbeam 120 with the stand column 110 being a rotation center, and can output building materials as needed within the range to build the house, and meanwhile it is also conducive to the building of an arc structure.

Preferably, the stand column 110 is cylindrical so that the crossbeam 120 can rotate around it. In addition, it is also preferred that the stand column 110 is hollow, or that the stand column 110 itself is constructed from a frame. In this way, a measuring component (not shown) can be provided inside the stand column 110 to measure whether a longitudinal axis of the stand column 110 is accurately vertical or perpendicular to a base surface. The base surface can be either the ground or a bottom of the building. The measuring component may include, for example, a plumb line extending downward from a top of the stand column 110 and a central marking point located at a center of a bottom of the stand column 110. When the central marking point is coincident with the plumb line or an extension line of the plumb line, it indicates that the stand column 110 is vertical as a whole; if they do not coincide, it indicates that the stand column 110 is not vertical as a whole. Alternatively, the measuring component may include, for example, a laser transmitter at a center of the top of the stand column 110 and a laser receiver at the center of the bottom of the stand column 110. The laser transmitter emits lasers downward, and when an emitted laser can be received by the laser receiver, it indicates that the stand column 110 is vertical as a whole; otherwise, it indicates that the stand column 110 is not vertical as a whole. The measuring component may also be any other suitable measuring component. It should be understood that the measuring device can also be provided around the stand column.

It should be understood that in the case where the stand column 110 is high, the stand column 110 may include a plurality of stand column sections superimposed on each other. A measuring component may be provided for the entire stand column 110 or for one or several of the stand column sections. That is to say, the plumb line and the laser transmitter can also be provided on a top of the one or several of the stand column sections, and the central marking point or the laser receiver can also be provided on a bottom of the one or several of the stand column sections.

In addition, such a measuring component can also be provided at a transverse farthest end of the crossbeam and at a corresponding position on the ground. For example, a laser transmitter can be provided at the transverse farthest end of the crossbeam, and the laser transmitter emits lasers downward. A corresponding laser receiver is provided at an edge of an area where the crossbeam is intended to cover so as to receive a laser from the laser transmitter. When the crossbeam rotates to an angle corresponding to the laser receiver, if the laser emitted by the laser transmitter can be received by the laser receiver, it indicates that the position, angle and other states of the crossbeam itself are in line with expectations; otherwise, it indicates that the position, angle and other states of the crossbeam itself are not in line with expectations, and at this time, the crossbeam should be adjusted until the laser receiver can receive the laser from the laser transmitter. This adjustment can be achieved by, for example, a balancing mechanism 140 described below. Through the above setting, the accuracy of the positions of the crossbeam and the discharging mechanism provided thereon can be effectively corrected, thereby facilitating the positioning of the building to be constructed and ensuring the accuracy of the dimensions of the building structure.

The laser receiver may, for example, be provided at one or more specific locations relative to the building to be constructed. Or, for example, a plurality of (e.g., four) laser receivers may be provided, which are evenly spaced apart from each other in a circumferential direction at the edge of the area where the crossbeam is intended to cover.

It should be understood that the laser transmitter can also be provided at any position on the crossbeam or on the discharging mechanism. The laser receiver is provided accordingly.

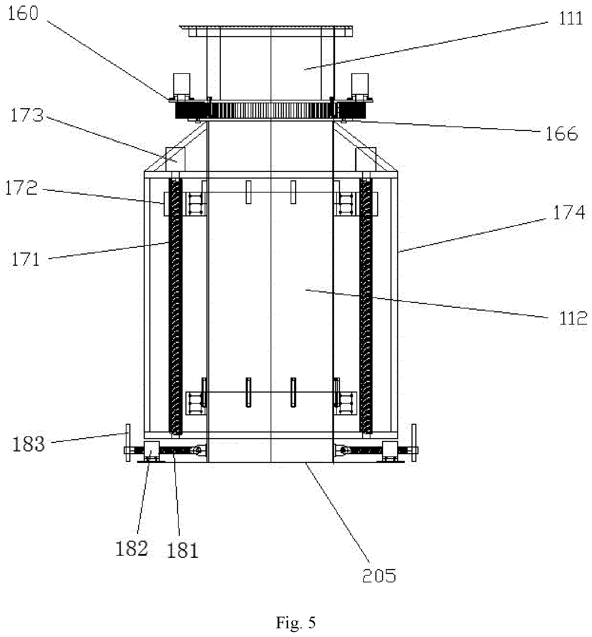

The building device 100 further comprises an adjusting component for adjusting the orientation of the stand column 110 to ensure that the stand column 110 is accurately vertical. Fig. 5 shows a preferable embodiment of the adjusting component. In this embodiment, the adjusting component includes a fixed part 182 fixed on the base surface (may be the ground, and may also be the bottom surface of the building) 205. The fixed part 182 is constructed with a receiving hole extending in the transverse direction (i.e., a direction parallel to the base surface 205). An axis of the receiving hole may pass through the central axis of the stand column 110. The adjusting component further includes a correction adjusting lever 181, one end of which is hinged with the stand column 110, and the correction adjusting lever 181 passes through the receiving hole and is selectively fixed relative to the receiving hole. In this way, when the stand column 110 is deflected toward or away from the correction adjusting lever 181, the correction adjusting lever 181 is moved under the guidance of the receiving hole on the fixed part 182, thereby adjusting the stand column 110 correspondingly. Preferably, external threads are constructed on an outer surface of the correction adjusting lever 181, while matching internal threads are constructed on an inner wall of the receiving hole. The correction adjusting lever 181 can be easily and efficiently moved by rotating the correction adjusting lever 181 to make the internal thread and the external thread move cooperatively. At the same time, when the correction adjusting lever 181 is not rotated, this structure is also beneficial to the fixing of the correction adjusting lever 181. Preferably, as shown in Fig. 5, on the other end of the correction adjusting lever 181 which is not hinged with the stand column 110, an operating handle 183 extending perpendicular to the correction adjusting lever 181 is provided, and the correction adjusting lever 181 can be effectively rotated by rotating the operating handle 183.

Preferably, a plurality of adjusting components is arranged around the stand column 110, and respective adjusting components are spaced apart from each other in the circumferential direction of the stand column 110. It should be understood that when two adjusting components are provided, the two adjusting components are preferably not collinear. In a most preferred embodiment, on the same base surface 205, four adjusting components evenly spaced apart in the circumferential direction are arranged around the stand column 110.

In one embodiment, the rotation of the crossbeam 120 relative to the stand column 110 can be achieved through the following structure.

The stand column itself includes a lower stand column unit 112 and an upper stand column unit 111. The upper stand column unit 111 is fixedly connected to the crossbeam 120 and can rotate around a central axis relative to the lower stand column unit 112. Preferably, as shown in Figs. 1 and 2, the building device 100 comprises a stand column rotating mechanism 160. The stand column rotating mechanism 160 includes an inner rotating ring 161 and an outer rotating ring 162 which are coaxially arranged with the stand column 110 (i.e., the upper stand column unit 111 and the lower stand column unit 112), the outer rotating ring 162 being sleeved outside the inner rotating ring 161. In the embodiment shown in Fig. 2, a movable auxiliary part 167 is arranged between the inner rotating ring 161 and the outer rotating ring 162 to ensure that the inner rotating ring 161 and the outer rotating ring 162 can rotate smoothly with respect to each other. The movable auxiliary part 167 may be a rolling body or a lubricant, etc., for example. The inner rotating ring 161 is fixed with the upper stand column unit 111 in the circumferential direction, and the outer rotating ring 162 is fixed with the lower stand column unit 112 in the circumferential direction. Thus, when the inner rotating ring and the outer rotating ring are caused to rotate relative to each other, the upper stand column unit 111 and the lower stand column unit 112 can also rotate relative to each other.

The stand column rotating mechanism 160 further includes a rotating motor. The rotating motor includes a rotating motor body 163 fixed with the inner rotating ring, and a rotating driving gear 164 extending out of the rotating motor body 163 and capable of being driven to rotate by the rotating motor body 163. The outer rotating ring 162 is constructed with teeth matched and meshed with the rotating driving gear 164. Thus, when the rotating motor body 163 drives the rotating driving gear 164 to rotate, the rotating driving gear 164 can rotate relative to the outer rotating ring 162. Since the outer rotating ring 162 is fixed to the fixed lower stand column unit 112, the rotating driving gear 164 will actually rotationally move around the outer rotating ring 162, thereby driving the rotating motor body 163 to rotationally move around the central axis of the outer rotating ring 162, and further driving the inner rotating ring 161 fixed thereto to rotate relative to the outer rotating ring 162. In this way, the upper stand column unit 111 can be effectively caused to rotate relative to the lower stand column unit 112. Preferably, a plurality of rotating motors can be arranged to facilitate driving of the inner rotating ring 161 to rotate.

More preferably, an upper support plate 165 extending in the transverse direction is fixedly provided above the inner rotating ring 161, and both the rotating motor body 163 and the upper stand column unit 111 are indirectly and fixedly connected with the inner rotating ring 161 by being fixedly connected with the upper support plate 165. Similarly, a lower support plate 166 extending in the transverse direction is fixedly provided below the outer rotating ring 162, and the lower stand column unit 112 is indirectly and fixedly connected to the outer rotating ring 162 by being fixedly connected to the lower support plate 166.

In a preferred embodiment, the upper support plate 165 includes both a central portion covering the inner rotating ring 161 and an edge portion covering the outer rotating ring 162. The central portion is fixedly connected with the inner rotating ring 161 through a screw or bolt. The edge portion is spaced from the outer rotating ring 162 to ensure that the upper support plate 165 can rotate relative to the outer rotating ring 162 without relative wear. To this end, the edge portion of the upper support plate 165 can be made thinner than the central portion.

Similarly, the lower support plate 166 may also include a central portion covering the inner rotating ring 161 and an edge portion covering the outer rotating ring. The edge portion of the lower support plate 166 is fixedly connected with the outer rotating ring 162 by a screw or bolt. The central portion of the lower support plate 166 is spaced from the inner rotating ring 161 to ensure that the inner rotating ring 161 can rotate relative to the lower support plate 166 without relative wear. To this end, the central portion of the lower support plate 166 can be made thinner than the edge portion. Alternatively, the lower support plate 166 may also include only the edge portion and not the central portion.

The building device 100 further comprises a lifting mechanism 170 for changing a height at which the crossbeam 120 is located. Figs. 5 to 8 show a preferred embodiment of the lifting mechanism 170.

As shown in Fig. 5, the lifting mechanism 170 includes a lifting lever 171 fixed with the upper stand column unit 111 in the longitudinal direction, and a guide 172 fixed with the lower stand column unit 112. The guide 172 is constructed with a guide hole extending along the longitudinal direction, and the lifting lever 171 passes through the guide hole and can be selectively fixed relative to the guide hole. Through the movement of the lifting lever 171 relative to the guide hole of the guide 172 along the longitudinal direction, the relative movement of the upper stand column 111 and the lower stand column 112 in the longitudinal direction can be realized, and further a height change of the crossbeam 120 fixed with the upper stand column 111 can be realized, thereby achieving a change, such as a rise, in the height of a discharging port.

The fixing of the upper stand column unit 111 and the lifting lever 171 in the longitudinal direction may be achieved by direct fixing between the upper stand column unit 111 and the lifting lever 171, and may also be achieved by other intermediate structures. For example, in the embodiment as shown in Fig. 5, the lifting mechanism 170 further includes a support frame 174 surrounding the stand column 110. The support frame 174 can be fixedly connected to the upper stand column unit 111, and can also be fixedly connected to the lifting lever 171.

In addition, in the case where a stand column rotating mechanism 160 is provided, the inner rotating ring 161 of the stand column rotating mechanism 160 may be directly sleeved outside the upper stand column unit 111 and fixed thereto. Alternatively, the upper stand column unit 111 includes a portion located above the stand column rotating mechanism 160 and fixed to the inner rotating ring 161, and a portion located below the stand column rotating mechanism 160 and fixed to the outer rotating ring 162. At this time, the outer rotating ring 162 and the lower support plate 166 are also fixed to the upper stand column unit 111 (or a portion of the upper stand column unit 111 above the stand column rotating mechanism 160) in the longitudinal direction, but can rotate relative to it. At this time, the support frame 174 can be fixed in the longitudinal direction with the upper stand column unit 111 by being fixed to the outer rotating ring 162 or the lower support plate 166.

In a preferred embodiment, external threads are constructed on an outer surface of the lifting lever 171, while matching internal threads are constructed on an inner wall of the guide hole on the guide 172. When the lifting lever 171 rotates relative to the guide hole, under the cooperation of the internal threads and the external threads, the lifting lever 171 can move in the longitudinal direction relative to the guide hole, that is, relative to the lower stand column unit 112. When the lifting lever 171 does not rotate relative to the guide hole, the lifting lever 171 can be effectively fixed with respect to the guide hole in the longitudinal direction. The lifting mechanism 170 may include a lifting motor 173 fixed to the support frame 174, and the lifting motor can drive the lifting lever 171 to rotate relative to the guide hole.

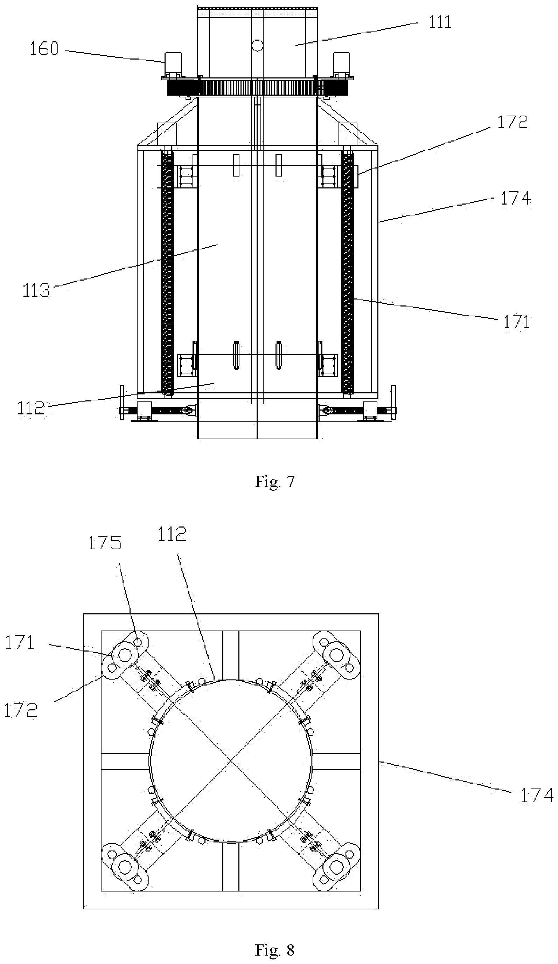

In the embodiment as shown in Fig. 8, the support frame 174 has a substantially rectangular section. Four lifting levers and corresponding guides are evenly arranged around the stand column 110 (the lower stand column unit 112) in the circumferential direction within the support frame. More preferably, the lifting mechanism further includes an auxiliary guide lever 175 fixed in the longitudinal direction relative to the lifting lever 171 and extending in the longitudinal direction; a corresponding hole is constructed on the guide 172, and the auxiliary guide lever 175 can pass through the hole and move relative to the hole. In this way, when the lifting lever 171 moves in the longitudinal direction relative to the guide 172, the movement can be guided more stably.

Preferably, four lifting levers 171 are evenly spaced apart in the circumferential direction of the stand column 110, and two auxiliary guide levers 175 are provided around each of the lifting levers 171.

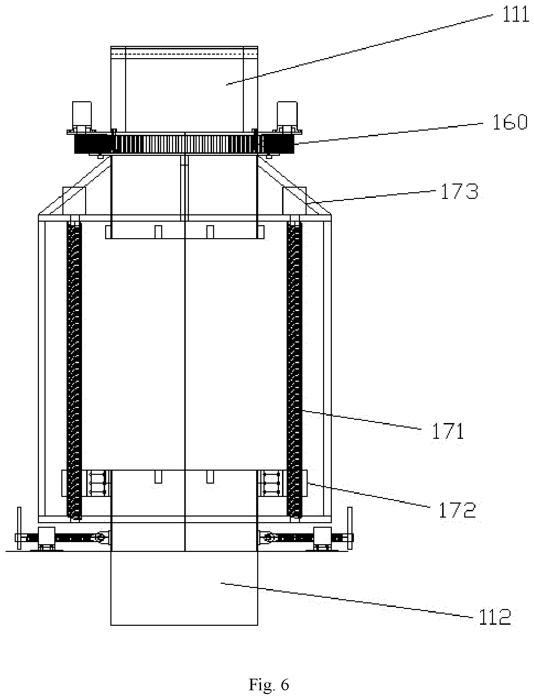

Fig. 5 shows the upper stand column unit 111 and the lower stand column unit 112 in contact with each other. Driving the lifting rod 171 to rotate by the lifting motor 173 can cause the upper stand column unit 111 to move along the longitudinal direction away from the lower stand column unit 112, so that a gap is formed between the upper stand column unit 111 and the lower stand column unit 112, as shown in Fig. 6. As shown in Fig. 7, a middle stand column unit 113 may be provided in the gap to support between the upper stand column unit 111 and the lower stand column unit 112. The middle stand column unit 113 can be fixedly connected to the lower stand column unit through pins, piercing nails or rivets and other tools. If it is desired to further lifting the crossbeam 120 and the upper stand column unit 111 connected thereto, then the middle stand column unit 113 and the upper stand column unit 111 are not fixedly connected for the time being. It should be understood that the upper stand column unit 111, the lower stand column unit 112, and the middle stand column unit 113 herein are all defined for a single lifting for convenience of explanation. In the case as shown in Fig. 7, if it is desired to continue to lift the upper stand column unit 111, the middle stand column unit 113 can be used as the lower stand column unit for the next lifting, and a guide is fixed thereon for the next lifting work.

In a preferred embodiment, after each layer of building body (e.g., a wall) is constructed by means of the discharging mechanism 130, the upper stand column unit 111 moves upward by a unit distance. The unit distance is, for example, 10 cm. After the upper stand column unit 111 moves upward by a plurality of unit distances (for example, after the lifting lever 171 moves almost an entire length distance of the lifting lever 171 relative to the guide 172, or after it moves a predetermined length distance), the middle stand column unit 113 is provided between the upper stand column unit 111 and the lower stand column unit 112.

The discharging mechanism 130 can move along the crossbeam by the following structures and means.

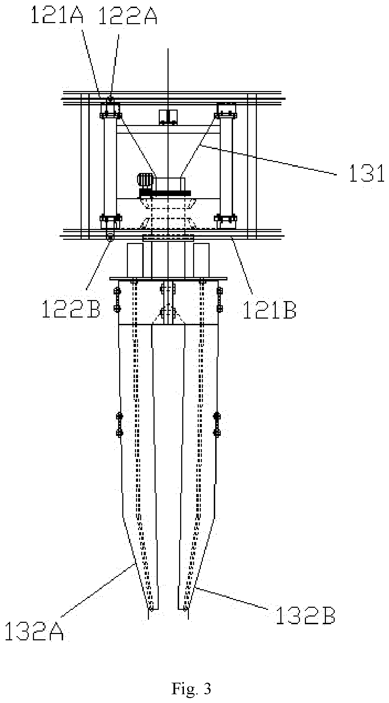

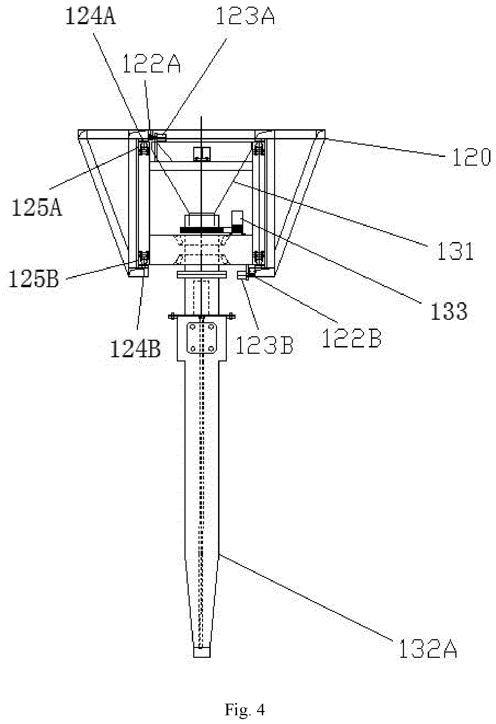

As shown in Figs. 3 and 4, the building device 100 comprises a rack 121B arranged along the crossbeam 120, and a transverse moving motor. The transverse moving motor includes a transverse moving motor body 123B fixedly connected to the discharging mechanism 130, and a transverse moving gear 122B driven to rotate by the transverse moving motor body 123B, the transverse moving gear 122B meshing with the rack 121B. Thus, when the transverse moving motor body 123B drives the transverse moving gear 122B to rotate, the transverse moving gear 122B can be rotated to move along the rack 121B, thereby driving the discharging mechanism 130 to move along the rack 121B. The crossbeam 120 includes an upper crossbeam and a lower crossbeam; at least a portion of the discharging mechanism 130 (e.g., a feed hopper 131) is positioned between the upper crossbeam and the lower crossbeam; and the rack 121B is fixedly provided along the lower crossbeam. In this way, during the movement of the discharging mechanism 130, the rack 121B can play a certain supporting role, and can closely cooperate with the transverse moving gear 122B.

In addition, preferably, another rack 121A may be fixedly provided on the upper crossbeam 121. Correspondingly, a transverse moving motor body 123A and a transverse moving gear 122A driven to rotate by the transverse moving motor body 123A are fixedly provided with the feeding mechanism 130. The transverse moving gear 122A meshes with the rack 121A and can move along the rack 121A.

In a preferred embodiment, guide rails 124A and 124B are arranged along the upper crossbeam and lower crossbeam respectively, and corresponding sliders 125A and 125B are fixedly provided with the feeding mechanism 130. During the movement of feeding mechanism 130 along crossbeam 120, its stability is higher. For example, two guide rails 124A spaced apart from each other may be provided on the upper crossbeam, and two sliders 125A are provided in cooperation with each guide rail 124A; two guide rails 124B spaced apart from each other may be provided on the lower crossbeam, and two sliders 125B are provided in cooperation with each guide rail 124B. In this case, the feeding mechanism 130 can be guided very stably.

In the embodiment as shown in Fig. 3, the feeding mechanism includes a feed hopper 131 arranged between the upper crossbeam and the lower crossbeam, and at least two discharging ports are rotatably connected and communicated with the feed hopper. At least two discharging ports 132A and 132B are provided, and the two discharging ports 132A and 132B are spaced apart from each other and deviate from the longitudinal axis of the discharging mechanism 130. In order to ensure that the discharging mechanism 130 can flexibly convey building materials, the discharging ports 132A and 132B can rotate around the longitudinal axis of the discharging mechanism 130, especially relative to the feed hopper 131. This is especially beneficial to the construction of the structure to be built when it turns, and even to the smooth establishment of a special-shaped structure. The discharging ports 132A and 132B can be driven to rotate by a rotary drive motor 133 arranged between the discharging ports and the feed hopper 131.

In addition, in the construction process, the discharging ports 132A and 132B can be symmetrically arranged relative to a central line of a building wall to be built in a building area.

The building device 100 is a 3D printing building device, i.e., a 3D printer Through this kind of 3D building printing device, it is possible to promote the mechanization and automation of construction work, and thereby improve the efficiency of the construction field and make up for the shortage of labor force.

In addition, as shown in Fig. 1, the building device 100 further comprises a storage container 151 for storing building materials or preparatory materials that can be converted into building materials. For example, the storage container 151 can be used to store materials as solid particles or powder. In addition, the storage container 151 can also be provided with wheels to facilitate the movement of the container. For example, the storage container 151 may be a pump truck with a drive pump.

The building device 100 further comprises a conveying pipeline 152 that is in communication with the storage container 151 and extends to the crossbeam 120 for conveying corresponding materials. In order to improve the stability, the conveying pipeline 152 can be made to pass through a hollow space inside the stand column 110 and be fixed at least in part with the stand column 110. Preferably, a shock absorber is provided at a fixed position.

The building device 100 further comprises a conveyor belt 153 arranged along the crossbeam 120. An upstream end of the conveyor belt 153 is close to the stand column 110 to receive a material from the conveying pipeline 152. A downstream end of the conveyor belt 153 is close to the feed hopper 131 of the discharging mechanism 130 to convey the material into the feed hopper 131.

Preferably, the downstream end of the conveyor belt 153 moves synchronously with the discharging mechanism 130 to ensure that the material is effectively conveyed to the discharging mechanism 130. For example, an additional drive motor may be provided at the downstream end of the conveyor belt 153, and drive motor works synchronously with the transverse moving motor.

In addition, as shown in Fig. 1, the crossbeam 120 can extend in two opposite extension directions, and in one of the extension directions, the discharging mechanism 130 is connected with the crossbeam 120. In order to keep the balance between the crossbeam 120 and the discharging mechanism 130, a balance mechanism 140 connected with the crossbeam 120 can be provided in another opposite extension direction, and the balance mechanism 140 can move along the crossbeam 120. By adjusting a position of the balance mechanism 140 on the crossbeam 120, the crossbeam 120 is prevented from being subjected to excessive torque, and thus the balance of the crossbeam 120 can be ensured, and the structural stability of the building device 100 can be ensured.

In a preferred embodiment, the building device 100 can also comprise a controller that can be used to control the working processes of the various structures described above. The drawing data of the building structure to be built can be input into the controller. A control system identifies and reads the drawing data, and instructs a corresponding structure to complete the 3D printing process, i.e., the construction process. A remote design can also be carried out through the Internet and the internet can be connected with the 3D printer. The data of architectural drawings are transmitted to a 3D printer through a computer for architectural printing. In addition, a monitoring device, especially a network monitoring device, connected with the controller, can also be provided so that operators can control the working process of the building device 100 in real time. The monitoring device can transmit and record the working process of the building device 100. In addition, the network can also be used to manage and track the building device 100 using the principle of thermal sensing, so as to maintain and repair the building device 100 in time.

All of the motors herein are preferably servo motors. The servo motor has the advantages of fast response, accurate positioning, large inertia, and excellent operation performance.

It should be understood that in the text, the terms "connected", "fixed" or "supporting" may be understood as "directly connected", "directly fixed" or "directly supporting", or as "indirectly connected", "indirectly fixed" or "indirectly supporting", unless otherwise specified.

## Claims

1. A building device (100), which is a 3D printing building device, comprising:
- a stand column (110) extending in a longitudinal direction,
- a crossbeam (120) extending in a transverse direction, the crossbeam (120) being connected with the stand column (110) and rotatable around a central axis of the stand column (110), the crossbeam (120) including an upper crossbeam (121) and a lower crossbeam, and
- a discharging mechanism (130) being connected with the crossbeam (120) and movable along the crossbeam (120), a discharging port (132A, 132B) of the discharging mechanism (130) facing a building area,
**characterized in that**
- the discharging mechanism (130) is constructed with at least two discharging ports (132A, 132B) spaced apart from each other and deviated from a central axis of the discharging mechanism (130),
- at least a feed hopper (131) of the discharging mechanism (130) is positioned between the upper crossbeam (121) and the lower crossbeam,
- the discharging ports (132A, 132B) are rotatably connected and communicated with the feed hopper (131);
- the discharging ports (132A, 132B) being rotatable around the central axis of the discharging mechanism (130), and relative to the feed hopper (131), and **in that**
- the discharging ports (132A, 132B) can be symmetrically arranged relative to a central line of a building wall to be built in a building area.

2. The building device according to claim 1, **characterized in that** the stand column (110) includes a lower stand column unit (112) and an upper stand column unit (111) located above the lower stand column unit (112); the crossbeam (120) is fixedly connected with the upper stand column unit (111); and the upper stand column unit (111) is rotatable around the central axis of the stand column (110) relative to the lower stand column unit (112).

3. The building device according to claim 2, **characterized in that** the building device comprises a stand column rotating mechanism (160), which includes:
an inner rotating ring (161) sleeved outside the stand column (110), the inner rotating ring (161) being fixed with the upper stand column unit (111) in a circumferential direction;
an outer rotating ring (162) sleeved outside the inner rotating ring (161), the outer rotating ring (162) being fixed with the lower stand column unit (112) in a circumferential direction, the inner rotating ring (161) being rotatable relative to the outer rotating ring (162), and an outer surface of the outer rotating ring (162) being constructed with teeth; and
a rotating motor including a rotating motor body (163) fixed with the inner rotating ring (161), and a rotating driving gear (164) rotatably connected with the rotating motor body (163), the rotating driving gear (164) meshing with the teeth on the outer surface of the outer rotating ring (162).

4. The building device according to claim 1 or 2, **characterized in that** the stand column (110) includes a lower stand column unit (112) and an upper stand column unit (111) located above the lower stand column unit (112), the crossbeam (120) being fixedly connected with the upper stand column unit (111);
the building device further comprises a lifting mechanism (170), which includes:
a lifting lever (171) fixed with the upper stand column unit (111) in the longitudinal direction; and
a guide (172) fixed on the lower stand column unit (112) and constructed with a guide hole extending along the longitudinal direction,
wherein the lifting lever (171) is movable in the longitudinal direction relative to the guide hole to drive the upper stand column unit (111) to move in the longitudinal direction relative to the lower stand column unit (112).

5. The building device according to claim 4, **characterized in that** external threads are constructed on an outer surface of the lifting lever (171), and internal threads are constructed on an inner surface of the guide hole, the external threads on the lifting lever (171) meshing with the internal threads on the guide hole;
the lifting mechanism (170) further includes:
a support frame (174) sleeved outside the stand column (110) and fixed with the upper stand column unit (111) and the lifting lever (171) in the longitudinal direction, and
a lifting motor (173) fixed to the support frame (174) and constructed to drive the lifting lever (171) to rotate relative to the guide hole.

6. The building device according to claim 4 or 5, **characterized in that** the stand column (110) further includes a middle stand column unit (113), which is provided in a gap to support between the upper stand column unit (111) and the lower stand column unit (112) when the upper stand column unit (111) moves away from the lower stand column unit (112) in the longitudinal direction to form the gap between the upper stand column unit (111) and the lower stand column unit (112),
wherein after each layer of building body is constructed by using the building device (100), the upper stand column unit (111) moves away from the lower stand column unit (112) by a unit distance in the longitudinal direction, and after the upper stand column unit (111) moves away from the lower stand column unit (112) by a plurality of unit distances, the middle stand column unit (113) is provided in the gap.

7. The building device according to any one of claims 1 to 6, **characterized in that** the building device (100) further comprises a vertical calibration mechanism, which includes:
a measuring component for measuring whether the central axis of the stand column (110) is accurately perpendicular to a base surface, and
an adjusting component including:
a fixed part (182) fixed to the base surface (205) and constructed with a receiving hole whose axis is parallel to the base surface (205), an inner wall of the receiving hole being constructed with internal threads; and
a correction adjusting lever (181) passing through the receiving hole, an outer surface of the correction adjusting lever (181) being constructed with external threads matching the internal threads of the receiving hole, and one end of the correction adjusting lever (181) being hinged with the stand column (110).

8. The building device according to any one of claims 1 to 7, **characterized in that** the building device (100) further comprises:
a rack (121B) arranged along the crossbeam (120), and
a transverse moving motor including a transverse moving motor body (123B) fixed to the discharging mechanism (130), and a transverse moving gear (122B) driven by the transverse moving motor body (123B), the transverse moving gear (122B) meshing with the rack (121B).

## Patentansprüche

1. Bauvorrichtung (100), die eine 3D-Druck-Bauvorrichtung ist, umfassend:
- eine sich in Längsrichtung erstreckende Standsäule (110),
- einen Querträger (120), der sich in einer Querrichtung erstreckt, wobei der Querträger (120) mit der Standsäule (110) verbunden und um eine Mittelachse der Standsäule (110) drehbar ist, wobei der Querträger (120) einen oberen Querträger (121) und einen unteren Querträger umfasst, und
- einen Entlademechanismus (130), der mit dem Querträger (120) verbunden und entlang des Querträgers (120) beweglich ist, wobei eine Entladeöffnung (132A, 132B) des Entlademechanismus (130) einem Gebäudebereich zugewandt ist,
**dadurch gekennzeichnet, dass**
- der Entlademechanismus (130) mit mindestens zwei voneinander beabstandeten und von einer Mittelachse des Entlademechanismus (130) abweichenden Entladungsöffnungen (132A, 132B) ausgebildet ist,
- mindestens ein Einfülltrichter (131) des Entlademechanismus (130) zwischen dem oberen Querträger (121) und dem unteren Querträger angeordnet ist,
- die Entleerungsöffnungen (132A, 132B) drehbar mit dem Einfülltrichter (131) verbunden sind und mit diesem in Verbindung stehen;
- die Entladeöffnungen (132A, 132B) um die Mittelachse des Entlademechanismus (130) und relativ zum Zuführtrichter (131) drehbar sind, und dass
- die Auslassöffnungen (132A, 132B) symmetrisch zu einer Mittellinie einer zu errichtenden Gebäudewand in einem Baugebiet angeordnet werden können.

2. Bauvorrichtung nach Anspruch 1, **dadurch gekennzeichnet, dass** die Standsäule (110) eine untere Standsäuleneinheit (112) und eine obere Standsäuleneinheit (111) aufweist, die oberhalb der unteren Standsäuleneinheit (112) angeordnet ist; dass der Querträger (120) fest mit der oberen Standsäuleneinheit (111) verbunden ist; und dass die obere Standsäuleneinheit (111) um die Mittelachse der Standsäule (110) relativ zur unteren Standsäuleneinheit (112) drehbar ist.

3. Bauvorrichtung nach Anspruch 2, **dadurch gekennzeichnet, dass** die Bauvorrichtung einen Standsäulendrehmechanismus (160) aufweist, der umfasst:
einen inneren Drehring (161), der außerhalb der Standsäule (110) ummantelt ist, wobei der innere Drehring (161) mit der oberen Standsäuleneinheit (111) in Umfangsrichtung befestigt ist;
einen äußeren Drehring (162), der außerhalb des inneren Drehrings (161) ummantelt ist, wobei der äußere Drehring (162) mit der unteren Standsäuleneinheit (112) in Umfangsrichtung befestigt ist, wobei der innere Drehring (161) relativ zu dem äußeren Drehring (162) drehbar ist und eine Außenfläche des äußeren Drehrings (162) mit Zähnen ausgebildet ist; und
einen rotierenden Motor mit einem rotierenden Motorkörper (163), der an dem inneren rotierenden Ring (161) befestigt ist, und ein rotierendes Antriebszahnrad (164), das drehbar mit dem rotierenden Motorkörper (163) verbunden ist, wobei das rotierende Antriebszahnrad (164) mit den Zähnen an der Außenfläche des äußeren rotierenden Rings (162) in Eingriff steht.

4. Bauvorrichtung nach Anspruch 1 oder 2, **dadurch gekennzeichnet, dass** die Standsäule (110) eine untere Standsäuleneinheit (112) und eine über der unteren Standsäuleneinheit (112) angeordnete obere Standsäuleneinheit (111) aufweist, wobei der Querträger (120) fest mit der oberen Standsäuleneinheit (111) verbunden ist;
die Bauvorrichtung umfasst ferner einen Hebemechanismus (170), der Folgendes umfasst:
einen Hubhebel (171), der in Längsrichtung an der oberen Standsäuleneinheit (111) befestigt ist; und
eine Führung (172), die an der unteren Standsäuleneinheit (112) befestigt ist und mit einem sich in Längsrichtung erstreckenden Führungsloch versehen ist,
wobei der Hubhebel (171) in der Längsrichtung relativ zum Führungsloch beweglich ist, um die obere Standsäuleneinheit (111) anzutreiben, sich in der Längsrichtung relativ zur unteren Standsäuleneinheit (112) zu bewegen.

5. Bauvorrichtung nach Anspruch 4, **dadurch gekennzeichnet, dass** an einer Außenfläche des Hubhebels (171) Außengewinde und an einer Innenfläche des Führungslochs Innengewinde ausgebildet sind, wobei die Außengewinde am Hubhebel (171) mit den Innengewinden am Führungsloch kämmen;
der Hebemechanismus (170) umfasst ferner:
einen Stützrahmen (174), der außerhalb der Standsäule (110) ummantelt und mit der oberen Standsäuleneinheit (111) und dem Hubhebel (171) in Längsrichtung befestigt ist, und
einen Hebemotor (173), der an dem Tragrahmen (174) befestigt ist und so konstruiert ist, dass er den Hubhebel (171) antreibt, um sich relativ zu dem Führungsloch zu drehen.

6. Bauvorrichtung nach Anspruch 4 oder 5, **dadurch gekennzeichnet, dass** die Standsäule (110) ferner eine mittlere Standsäuleneinheit (113) aufweist, die in einem Spalt zur Abstützung zwischen der oberen Standsäuleneinheit (111) und der unteren Standsäuleneinheit (112) vorgesehen ist, wenn sich die obere Standsäuleneinheit (111) in Längsrichtung von der unteren Standsäuleneinheit (112) wegbewegt, um den Spalt zwischen der oberen Standsäuleneinheit (111) und der unteren Standsäuleneinheit (112) zu bilden,
wobei, nachdem jede Schicht des Baukörpers unter Verwendung der Bauvorrichtung (100) aufgebaut ist, sich die obere Standsäuleneinheit (111) von der unteren Standsäuleneinheit (112) um eine Einheitsdistanz in der Längsrichtung wegbewegt, und nachdem sich die obere Standsäuleneinheit (111) von der unteren Standsäuleneinheit (112) um eine Mehrzahl von Einheitsdistanzen wegbewegt hat, die mittlere Standsäuleneinheit (113) in der Lücke vorgesehen ist.

7. Bauvorrichtung nach einem der Ansprüche 1 bis 6, **dadurch gekennzeichnet, dass** die Bauvorrichtung (100) ferner einen vertikalen Kalibrierungsmechanismus umfasst, der Folgendes umfasst:
eine Messkomponente zur Messung, ob die Mittelachse der Standsäule (110) genau senkrecht zu einer Grundfläche steht, und
eine Einstellkomponente, einschließlich:
ein festes Teil (182), das an der Grundfläche (205) befestigt und mit einem Aufnahmeloch versehen ist, dessen Achse parallel zur Grundfläche (205) verläuft, wobei eine Innenwand des Aufnahmelochs mit einem Innengewinde versehen ist; und
einen Korrektureinstellhebel (181), der durch das Aufnahmeloch hindurchgeht, wobei eine Außenfläche des Korrektureinstellhebels (181) mit einem Außengewinde ausgebildet ist, das mit dem Innengewinde des Aufnahmelochs übereinstimmt, und wobei ein Ende des Korrektureinstellhebels (181) an der Stativsäule (110) angelenkt ist.

8. Bauvorrichtung nach einem der Ansprüche 1 bis 7, **dadurch gekennzeichnet, dass** die Bauvorrichtung (100) ferner umfasst:
eine Zahnstange (121B), die entlang des Querträgers (120) angeordnet ist, und
einen querverlaufenden Motor mit einem querverlaufenden Motorkörper (123B), der an dem Ausgabemechanismus (130) befestigt ist, und ein querverlaufendes Zahnrad (122B), das von dem querverlaufenden Motorkörper (123B) angetrieben wird, wobei das querverlaufende Zahnrad (122B) mit der Zahnstange (121B) kämmt.

## Revendications

1. Dispositif de construction (100), qui est un dispositif de construction à impression 3D, comprenant :
- une colonne de support (110) s'étendant dans un sens longitudinal,
- une traverse (120) s'étendant dans un sens transversal, la traverse (120) étant reliée à la colonne de support (110) et pouvant tourner autour d'un axe central de la colonne de support (110), la traverse (120) comprenant une traverse supérieure (121) et une traverse inférieure, et
- un mécanisme de décharge (130) relié à la traverse (120) et pouvant se déplacer le long de la traverse (120), un orifice de décharge (132A, 132B) du mécanisme de décharge (130) faisant face à une zone de construction,
**caractérisé en ce que**
- le mécanisme de décharge (130) est réalisé avec au moins deux orifices de décharge (132A, 132B) espacés l'un de l'autre et déviés d'un axe central du mécanisme de décharge (130),
- au moins une trémie d'entrée (131) du mécanisme de décharge (130) est positionnée entre la traverse supérieure (121) et la traverse inférieure,
- les orifices de décharge (132A, 132B) sont reliés de manière rotative et communiquent avec la trémie d'entrée (131),
- les orifices de décharge (132A, 132B) pouvant tourner autour de l'axe central du mécanisme de décharge (130), et par rapport à la trémie d'entrée (131), et **en ce que**
- les orifices de décharge (132A, 132B) peuvent être disposés symétriquement par rapport à une ligne centrale d'un mur de bâtiment à construire dans une zone de construction.

2. Dispositif de construction selon la revendication 1, **caractérisé en ce que** la colonne de support (110) comporte une unité de colonne de support inférieure (112) et une unité de colonne de support supérieure (111) située au-dessus de l'unité de colonne de support inférieure (112) ; la traverse (120) est reliée à demeure à l'unité de colonne de support supérieure (111) ; et l'unité de colonne de support supérieure (111) peut tourner autour de l'axe central de la colonne de support (110) par rapport à l'unité de colonne de support inférieure (112).

3. Dispositif de construction selon la revendication 2, **caractérisé en ce que** le dispositif de construction comprend un mécanisme de rotation de colonne de support (160) qui comporte :
une bague rotative intérieure (161) gainée à l'extérieur de la colonne de support (110), la bague rotative intérieure (161) étant fixée à l'unité de colonne de support supérieure (111) dans un sens circonférentiel ;
une bague rotative extérieure (162) gainée à l'extérieur de la bague rotative intérieure (161), la bague rotative extérieure (162) étant fixée à l'unité de colonne de support inférieure (112) dans un sens circonférentiel, la bague rotative intérieure (161) pouvant tourner par rapport à la bague rotative extérieure (162), et une surface extérieure de la bague rotative extérieure (162) étant réalisée avec des dents ; et
un moteur rotatif comportant un corps de moteur rotatif (163) fixé à la bague rotative intérieure (161), et un engrenage d'entraînement rotatif (164) relié de manière rotative au corps de moteur rotatif (163), l'engrenage d'entraînement rotatif (164) s'engrenant avec les dents sur la surface extérieure de la bague rotative extérieure (162).

4. Dispositif de construction selon la revendication 1 ou 2, **caractérisé en ce que** la colonne de support (110) comporte une unité de colonne de support inférieure (112) et une unité de colonne de support supérieure (111) située au-dessus de l'unité de colonne de support inférieure (112), la traverse (120) étant reliée à demeure à l'unité de colonne de support supérieure (111) ;
le dispositif de construction comprend en outre un mécanisme de levage (170) qui comporte :
un levier de levage (171) fixé à l'unité de colonne de support supérieure (111) dans le sens longitudinal ; et
un guide (172) fixé sur l'unité de colonne de support inférieure (112) et réalisé avec un trou de guidage s'étendant le long du sens longitudinal,
**en ce que** le levier de levage (171) peut se déplacer dans le sens longitudinal par rapport au trou de guidage pour entraîner l'unité de colonne de support supérieure (111) à se déplacer dans le sens longitudinal par rapport à l'unité de colonne de support inférieure (112).

5. Dispositif de construction selon la revendication 4, **caractérisé en ce que** des filetages externes sont réalisés sur une surface extérieure du levier de levage (171), et des filetages internes sont réalisés sur une surface intérieure du trou de guidage, les filetages externes sur le levier de levage (171) s'engrenant avec les filetages internes sur le trou de guidage ;
le mécanisme de levage (170) comprend en outre :
un cadre de support (174) gainé à l'extérieur de la colonne de support (110) et fixé à l'unité de colonne de support supérieure (111) et le levier de levage (171) dans le sens longitudinal, et
un moteur de levage (173) fixé au cadre de support (174) et réalisé pour entraîner le levier de levage (171) à tourner par rapport au trou de guidage.

6. Dispositif de construction selon la revendication 4 ou 5, **caractérisé en ce que** la colonne de support (110) comporte en outre une unité de colonne de support centrale (113) qui est ménagée dans un espace destiné au support entre l'unité de colonne de support supérieure (111) et l'unité de colonne de support inférieure (112) lorsque l'unité de colonne de support supérieure (111) s'éloigne de l'unité de colonne de support inférieure (112) dans le sens longitudinal pour former l'espace entre l'unité de colonne de support supérieure (111) et l'unité de colonne de support inférieure (112),
**en ce que** l'unité de colonne de support supérieure (111) s'éloigne de l'unité de colonne de support inférieure (112) d'une distance unitaire dans le sens longitudinal une fois la réalisation de chaque couche de corps de construction en utilisant le dispositif de construction (100), et l'unité de colonne de support centrale (113) est ménagée dans l'espace après que l'unité de colonne de support supérieure (111) s'éloigne de l'unité de colonne de support inférieure (112) d'une pluralité de distances unitaires.

7. Dispositif de construction selon l'une des revendications 1 à 6, **caractérisé en ce que** le dispositif de construction (100) comprend en outre un mécanisme de calibrage vertical qui comporte :
un composant de mesure pour mesurer si l'axe central de la colonne de support (110) est exactement perpendiculaire à une surface de base, et
un composant d'ajustage comprenant :
une partie fixe (182) fixée à la surface de base (205) et réalisée avec un trou de réception dont l'axe est parallèle à la surface de base (205), une paroi intérieure du trou de réception étant réalisée avec des filetages internes ; et
un levier d'ajustage de correction (181) passant par le trou de réception, une surface extérieure du levier d'ajustage de correction (181) étant réalisée avec des filetages externes correspondant aux filetages internes du trou de réception, et une extrémité du levier d'ajustage de correction (181) étant articulée avec la colonne de support (110).

8. Dispositif de construction selon l'une des revendications 1 à 7, **caractérisé en ce que** le dispositif de construction (100) comprend en outre :
une crémaillère (121B) disposée le long de la traverse (120), et
un moteur de déplacement transversal comportant un corps de moteur de déplacement transversal (123B) fixé au mécanisme de décharge (130), et un engrenage de déplacement transversal (122B) entraîné par le corps de moteur de déplacement transversal (123B), l'engrenage de déplacement transversal (122B) s'engrenant avec la crémaillère (121B).
